# EUROPEAN PATENT SPECIFICATION

(11) **EP 0 445 181 B1**
(45) Date of publication and mention of the grant of the patent: **01.05.1996**
(21) Application number: 89913125.4
(22) Date of filing: 17.11.1989
(51) Int. Cl.: C08J 5/12, C09J 177/00, C08L 77/02, C08L 77/06

(54) **ADHESIVE**
BINDEMITTEL
ADHESIF

(30) Priority: 18.11.1988 AU 1536/88
(43) Date of publication of application: 11.09.1991
(73) Proprietor: ELF ATOCHEM (AUSTRALIA) PTY LIMITED, Sydney, New South Wales (AU)
(72) Inventor: FURLONG, Donald, Neil, Moonee Ponds, VIC 3039 (AU); LODER, John, West, South Yarra, VIC 3141 (AU); WELLS, Darrell, Nunawading, VIC 3131 (AU)
(74) Representative: MacGregor, Gordon
(86) International application number: AU8900496
(87) International publication number: WO9005756

(56) References cited:
- EP-A- 0 311 292
- CH-A- 0 367 324
- DE-A- 0 953 996
- GB-A- 634 422
- US-A- 1 946 057
- US-A- 3 673 145
- 'The Merck Index' 10th Edition, published 1983 by MERCK & CO. INC (USA) page 261-262 No 1855 Carvacrol.
- 'The Merck Index' 10th Edtion, published 1983 by MERCK & Co, INC (USA) page 1347 No 9246 Thymol.
- The Merck Index, 10th edition, 1983, p. 369, 1043
- Römpps Chemie-Lexikon, 8th edition, 1985, Franckh'sche Verlagsbuchhandlung, Stuttgart, p. 2861-2862, 3128

## Description

### FIELD OF THE INVENTION

The present invention relates to an adhesive for bonding polyamide surfaces.

### BACKGROUND OF THE INVENTION

Inert polymeric materials, such as polyamide compositions, have been bonded in the past by application to the surface of the materials of a solvent effective for the materials to be joined, resulting in interpenetration in the bonding zone of the polymers from both surfaces. Such adhesion is due primarily to cohesion within the solid polymer, thus filling the bonding region after the solvent evaporates. Alternatively, where the degree of mating of the two surfaces to be bonded is too great for the above mechanism to give the desired adhesive strength, an adhesive can be prepared containing pre-dissolved polyamide so to as enhance the "gap filling" ability of the adhesive.

Materials currently in use as solvents of the above mentioned kind are few due to the inertness of the polymer to solvent attack. The solvents currently used generally are good hydrogen bonders, contain some hydrophobic moieties and often acidic hydrogen. Such a combination of properties results in the known solvents being toxic to man. The toxicity is often systemic and via external exposure, with risk of burns and lesions. The most well-known class of such solvents are phenols which are highly toxic to man. The most common known solvents for polyamide are cresols and chlorophenols both of which are known to be harmful substances. Other solvents include various fluoroalcohols which are generally highly toxic to man.

The main objects of the present invention are to provide an adhesive suitable for use in bonding polyamides, and having low toxicity, particularly low systemic toxicity; providing high adhesion strength, particularly with reference to tensile and peel testing; providing rapidity of curing such that joint strength is acquired quickly; having broad temperature applicability; and having desirable gap filling capability. Desirably the adhesive should be suitable for joining pipe systems to be pressurized, e.g. gas pipes and fittings and should have a good shelf life.

An adhesive meeting the above objects would have applications in the food/water processing areas for which currently available (relatively toxic) adhesives are unsuitable.

The invention provides an adhesive for bonding polyamide surfaces comprising a mixture of thymol and carvacrol.

A mixture of carvacrol and thymol, and more preferably an eutectic mixture of carvacrol and thymol, have been found to be especially suitable for bonding polyamides.

The invention also resides in a method of adhering together two polyamide surfaces comprising applying to at least one of the surfaces an adhesive in liquid from and as disclosed above and bringing said surfaces into bonding relationship.

### PREFERRED EMBODIMENTS OF THE INVENTION

The invention will now be more particularly described with reference to various embodiments by way of example only.

Polyamides are polymers in which regularly occuring amide groups are part of a methylene polymer chain as shown in Figure 1.

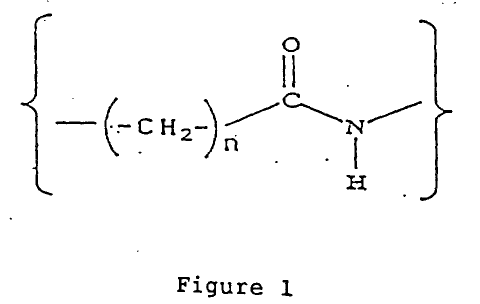

Specific polyamides (abbreviated to "PA") are identified by numerals which indicate the number of carbon atoms in the carbon chain of each repeating unit of the polymer. Thus, with reference to Figure 1, PA 11 is the name given to the polyamide polymer in which n = 10, and PA 12 is the name given to the polyamide polymer in which n = 11 and so on. In addition, AABB polyamide polymers are known and in that case a designation such as PA 12/12 indicates that the chain is derived from diamine units having 12 carbon atoms and dicarboxylic acid units having 12 carbon atoms. PA 6/12 indicates a chain derived from 6-carbon-atom diamine units co-polymerized with 12-carbon-atom dicarboxylic acid units and so on.

In an attempt to develop an improved adhesive for polyamides a large number of compounds were screened as solvents for PA 11.

The solvents were tested alone and in mixtures and were selected from:
Aromatic and aliphatic amines
Aromatic and aliphatic alcohols
Aromatic and aliphatic halides
Aromatic and cyclic aliphatic ethers
Aromatic and aliphatic acids
Metal salts in combination with various organic solvents

Of the compounds tested from the above categories none were effective solvents for PA 11.

Phenols tested were found to be effective as solvents. However, these were initially rejected as being as, or more, toxic than methyl phenol (cresol), and because most have melting points above room temperature. Some high melting point phenols, when dissolved in a halogenated solvent, were found to form a reasonably effective glue but those compositions had little capacity to dissolve PA 11 to give gap filling abilities. Moreover, either the phenol or solvent or both were harmful or environmentally undesirable.

The adhesive of the invention includes carvacrol (2-METHYL, 5-ISOPROPYL PHENOL), which has a single phenolic hydroxyl group having a meta-isopropyl substituent and an adjacent methyl substituent and thymol (5-METHYL, 2-ISOPROPYL PHENOL) which has a single phenolic hydroxyl group sterically hindered by the ortho-isopropyl substituent and a meta methyl substituent.

The chemical structures of carvacrol and thymol are shown below:

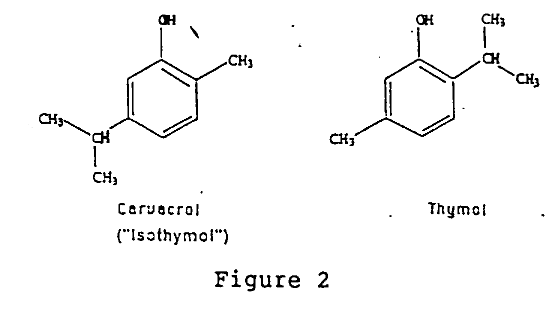

The isopropyl and methyl substituents together reduce the toxicity of the compound, that is to say the substituted compound is less toxic than the corresponding unsubstituted phenol.

It has been found that a mixture of carvacrol and thymol is particularly effective solvents for polyamides.

Carvacrol has a melting point of about 1°C and is therefore liquid at room temperature, whereas thymol, having a melting point of about 50°C, is a solid under ambient conditions.

Both compounds occur naturally in essential oils commonly used as food flavorants; carvacrol is the major constituent of oil of origanum, and thymol the major constituent of oil of thyme. Both are manufactured synthetically for a variety of commercial uses which include perfumery, antibacterial applications such as toothpastes, mouth washes, and flavour additives for food, for which both compounds have been approved by the Food and Drug Administration of the USA. Toxicity data currently available gives both compounds the relatively innocuous rating of "irritating". Both compounds are thus substantially harmless in comparison with, for example, cresols or chlorphenols. However, grades of sufficient purity should be employed.

In particular, it is preferred to use a combination of carvacrol and thymol mixed in the proportion 2:1 by weight.

Carvacrol itself is a satisfactory solvent for various inert polymeric materials, particularly polyamides, and provides acceptable adhesive bond strength. However, it is unusable at below about 1°C as it solidifies.

Thymol has a melting point of about 50°C, and although it gives a satisfactory adhesive strength when used above this temperature, it is often inconvenient for use on its own due to its high melting point.

However, when carvacrol and thymol are mixed in the weight proportion 2:1 they form an eutectic mixture which remains liquid to below -20°C. The eutectic mixture is therefore advantageously chosen as the optimum solvent base for use in the present invention.

In use, the mixture is applied to one, or preferably to both, surfaces of polyamide parts to be bonded and the treated surfaces are then mated face to face, that is to say are brought into bonding relationship.

Although this solvent base alone can form a satisfactory adhesive bond between well-mating polyamide surfaces, it has little or no gap-filling properties and is of too low a viscosity to be applied effectively to inclined surfaces. To overcome these deficiencies the adhesive is preferably formulated to contain up to 10% of a polyamide in solution in the carvacrol/thymol solvent base. The concentration and type of dissolved polyamide in the adhesive formulation is chosen to suit the type of service application desired. PA 11 is the preferred dissolved polymer for joining a PA 11 surface to either a PA 11 or a PA 12 surface, while PA 12 is preferred for bonding two PA 12 surfaces. The polyamide or polyamides are preferably added to the solvent as a powder.

At any given temperature, increasing the level of dissolved polyamide produces an adhesive of increased viscosity, which has improved gap-filling properties, but a lengthened set time. Conversely a lower polyamide concentration lowers the viscosity of the adhesive, reducing the gap-filling properties, but speeding up the set time. Furthermore, temperature strongly affects the adhesive's properties; both viscosity and set time increase with decreasing temperature. The adhesive may therefore be formulated with varying dissolved polyamide concentrations suited to the intended temperature of use, which maintain optimum set time and viscosity. Low ambient temperatures require a lower level of dissolved polyamide and, conversely, high ambient temperatures require a higher level.

In particular, for an adhesive to be used to join polyamide pipe and fittings conforming to Australian Standard 2944 at ambient temperatures between 10°C and 30°C the preferred concentration of dissolved polyamide is 5% by weight.

Although AS 2944 relates to gas pipes, the invention is applicable to pipes used for other purposes and for joining tubes.

The adhesives of the present invention are preferably used for adhering PA 11 or PA 12 surfaces together by a solvent adhesive mechanism. This mechanism may be explained in simple terms as follows:
1. The adhesive dissolves each of the two surfaces to be bonded resulting in interpenetration in the bonding zone of polymer from both surfaces as a solution in the adhesive;
2. The solvent is lost by evaporation or penetration and diffusion into the body of the substrate and/or eventual evaporation, leaving the bonding zone comprised of solid polymer. The resultant adhesion between the two substrates is due primarily to cohesion within the solid polymer that fills the bonding region after loss of solvent. Where the degree of mating of the two surfaces is insufficient for the above mechanism to give the desired adhesive strength, the adhesive may be prepared to contain pre-dissolved polyamide so as to enhance the gap-filling ability of the adhesive.

Preferred embodiments of this invention have the advantages of:
1. Being relatively non-toxic in comparison with those previously used and having no systemic toxicity;
2. Having an unlimited shelf life and remaining liquid down to a temperature of -20°C;
3. Having viscosities suitable for applying a film of the minimum thickness necessary to form an adhesive bond over the temperature range -20°C to +35°C;
4. Forming effective adhesive bonds when applied at ambient temperatures within the range -20°C to +35°C;
5. Setting within 30 minutes of the assembly of a joint between a polyamide pipe and corresponding pipe fitting conforming to Australian Standard 2944, the joint being able to withstand an internal pressure test of 320 kPa, and a tensile load equivalent to 60% of the yield load of the pipe after this period;
6. Forming adhesively bonded joints as per 5 above which attain maximum strength within a week and which will withstand a tensile load in excess of the yield load of the pipe.

Adhesives prepared in accordance with the present invention may be varied extensively with regard to setting rate, and hence may be used in service applications where rapid setting is required, as well as those where rapid setting may be disadvantageous.

The adhesives are not limited to use with PA 11 and PA 12 and are also applicable to PA 12/12, PA 10/10, PA 6/12, PA 6/10, PA 6/6, PA 6, PA 4/6 and other polyamides.

Adhesives according to the invention may be used to bond polyamide block copolymers and branch chain polyamides.

## Claims

1. An adhesive for bonding polyamide surfaces comprising a mixture of thymol and carvacrol.

2. The adhesive of claim 1, wherein the proportion of carvacrol to thymol is substantially that of the eutectic mixture.

3. The adhesive of claim 1 wherein the carvacrol and thymol is present in a ratio of 2:1 by weight.

4. The adhesive of any preceding claim comprising a polyamide dissolved in the mixture.

5. The adhesive of claim 4, wherein the mixture comprises up to 10% of a dissolved polyamide.

6. The adhesive according to claim 5, wherein the polyamide is in an amount of 5% by weight.

7. The adhesive of claim 5 or 6, wherein the dissolved polyamide comprises a polyamide selected from the group consisting of polyamide 10/10, polyamide 12/12, polyamide 6/12, polyamide 6/10, polyamide 6/6, polyamide 6 and polyamide 4/6.

8. The adhesive of claim 5 or 6, wherein the dissolved polyamide is polyamide 11 or polyamide 12.

9. A polyamide product bonded with another polyamide product by means of an adhesive according to any preceding claim.

10. A polyamide pipe bonded with another pipe or pipe fitting by means of an adhesive according to any one of claims 1 to 8.

11. A method of adhering together two polyamide surfaces comprising applying to at least one of the surfaces an adhesive in liquid form and as in any one of claims 1 to 8; and bringing said surfaces into bonding relationship.

12. A method according to claim 11 wherein one of the surfaces includes a polyamide selected from the group consisting of polyamide 10/10, polyamide 12/12, polyamide 6/12, polyamide 6/10, polyamide 6/6, polyamide 6, polyamide 4/6, polyamide 11 and polyamide 12.

## Patentansprüche

1. Klebemittel zum Verbinden von Polyamid-Oberflächen, bestehend aus einer Mischung von Thymol und Carvacrol.

2. Klebemittel nach Anspruch 1, wobei das Verhältnis von Carvacrol zu Thymol im wesentlichen das der eutektischen Mischung ist.

3. Klebemittel nach Anspruch 1, wobei Carvacrol und Thymol in einem Gewichtsverhältnis von 2:1 vorliegen.

4. Klebemittel nach irgendeinem vorangehenden Anspruch, dadurch gekennzeichnet,
daß es in der Mischung gelöstes Polyamid aufweist.

5. Klebemittel nach Anspruch 4, wobei die Mischung bis zu 10 % an gelöstem Polyamid enthält.

6. Klebemittel nach Anspruch 5, wobei das Polyamid in einer Menge von 5 Gew.-% vorliegt.

7. Klebemittel nach Anspruch 5 oder 6, wobei das gelöste Polyamid ein Polyamid ist, das aus der Gruppe ausgewählt ist, welche aus Polyamid 10/10, Polyamid 12/12, Polyamid 6/12, Polyamid 6/10, Polyamid 6/6, Polyamid 6 und Polyamid 4/6 gebildet ist.

8. Klebemittel nach Anspruch 5 oder 6, wobei das gelöste Polyamid Polyamid 11 oder Polyamid 12 ist.

9. Polyamidprodukt verbunden mit einem anderen Polyamidprodukt mittels eines Klebemittels gemäß irgendeinem vorangehenden Anspruch.

10. Polyamidrohr verbunden mit einem anderen Rohr oder Rohranschluß mittels eines Klebemittels gemäß irgendeinem der Ansprüche 1 bis 8.

11. Verfahren zum Zusammenkleben zweier Polyamidoberflächen gemäß welchem wenigstens eine der Oberflächen mit einem Klebemittel in flüssiger Form und wie in irgendeinem der Ansprüche 1 bis 8 beansprucht versehen wird und die Oberflächen in Verbindungsbeziehung gebracht werden.

12. Verfahren nach Anspruch 11, wobei eine der Oberflächen ein Polyamid einschließt, das ausgewählt ist aus der Gruppe, die aus Polyamid 10/10, Polyamid 12/12, Polyamid 6/12, Polyamid 6/10, Polyamid 6/6, Polyamid 6, Polyamid 4/6, Polyamid 11 und Polyamid 12 gebildet ist.

## Revendications

1. Adhésif destiné au collage de surfaces polyamides, comprenant un mélange de thymol et de carvacrol.

2. Adhésif selon la revendication 1, dans lequel la proportion de carvacrol par rapport au thymol est sensiblement proche de celle du mélange eutectique.

3. Adhésif selon la revendication 1, dans lequel le carvacrol et le thymol sont présents dans un rapport pondéral de 2:1.

4. Adhésif selon l'une quelconque des revendications précédentes, comprenant un polyamide dissout dans le mélange.

5. Adhésif selon la revendication 4, dans lequel le mélange comprend jusqu'à 10 % d'un polyamide dissout.

6. Adhésif selon la revendication 5, dans lequel la teneur pondérale du polyamide est de 5 %.

7. Adhésif selon la revendication 5 ou 6, dans lequel le polyamide dissout comprend un polyamide sélectionné dans le groupe formé de polyamide 10/10, polyamide 12/12, polyamide 6/12, polyamide 6/10, polyamide 6/6, polyamide 6 et polyamide 4/6.

8. Adhésif selon la revendication 5 ou 6, dans lequel le polyamide dissout est du polyamide 11 ou du polyamide 12.

9. Produit polyamide collé à un autre polyamide au moyen d'un adhésif selon l'une quelconque des revendications précédentes.

10. Tube en polyamide, collé à un autre tube ou raccord de tube, au moyen d'un adhésif selon l'une quelconque des revendications 1 à 8.

11. Procédé pour coller ensemble deux surfaces polyamides, comprenant les étapes selon lesquelles on applique sur l'une au moins des surfaces un adhésif sous forme liquide et tel que défini dans l'une quelconque des revendications 1 à 8 ; et on amène lesdites surfaces en relation de collage.

12. Procédé selon la revendication 11, dans lequel l'une des surfaces comprend un polyamide sélectionné dans le groupe formé de polyamide 10/10, polyamide 12/12, polyamide 6/12, polyamide 6/10, polyamide 6/6, polyamide 6, polyamide 4/6, polyamide 11 et polyamide 12.
